(19) Europäisches Patentamt
European Patent Office
Office européen des brevets

(11) **EP 4 597 809 A1**

(12) **EUROPEAN PATENT APPLICATION**
published in accordance with Art. 153(4) EPC

(43) Date of publication:
06.08.2025 Bulletin 2025/32

(21) Application number: 22960980.5

(22) Date of filing: 30.09.2022

(51) International Patent Classification (IPC):
*H02K 19/10* (2006.01)

(52) Cooperative Patent Classification (CPC):
H02K 19/10

(86) International application number:
PCT/JP2022/036661

(87) International publication number:
WO 2024/069921 (04.04.2024 Gazette 2024/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MITSUBISHI ELECTRIC
CORPORATION
Chiyoda-ku
Tokyo 100-8310 (JP)

(72) Inventors:
• HAMADA, Yu
Tokyo 100-8310 (JP)
• HAZEYAMA, Moriyuki
Tokyo 100-8310 (JP)
• KANEKO, Kenta
Tokyo 100-8310 (JP)
• JIKE, Naoya
Tokyo 100-8310 (JP)

(74) Representative: Witte, Weller & Partner
Patentanwälte mbB
Postfach 10 54 62
70047 Stuttgart (DE)

(54) **SYNCHRONOUS RELUCTANCE MOTOR AND DRIVE DEVICE FOR ROLLING STOCK**

(57) A synchronous reluctance motor (1) includes a stator core (9) in which a plurality of slots (14) is formed, and a rotor core (11) formed in the shape of a cylinder on an inner surface side of the stator core (9). The rotor core (11) includes a plurality of slits (15) in which an opening thereof is divided by a center rib (18a). A slit interval in the rotor core (11) is formed to be smaller than a slot interval in the stator core (9). In the rotor core (11), at least three layers of slit groups are formed, and at least two layers of the at least three layers of the slit groups are provided with side ribs (18b). An average magnetic path width $W_{t2-3}$ that is on a q-axis side of a layer in which the side ribs (18b) are provided first when a plurality of the slit groups is viewed from the q-axis side to a d-axis side is larger than an average magnetic path width $W_{t3-4}$ that is on the d-axis side of the layer in which the side ribs (18b) are provided first.

FIG.8

**Description**

Field

The present disclosure relates to a synchronous reluctance motor utilizing reluctance torque and a drive apparatus for a railroad vehicle.

Background

Synchronous reluctance motors are used in railroad vehicles, air conditioners, automobiles, and the like. The synchronous reluctance motor rotates as a result of reluctance torque generated by magnetic saliency that occurs due to slits formed in a rotor core. Meanwhile, the slits formed in the rotor core reduces the strength of the rotor core. The rotor core needs to have the strength enough to withstand centrifugal force when a rotor rotates. Thus, as described in Patent Literature 1 below, a strength member called a rib is formed in the slit.

Citation List

Patent Literature

Patent Literature 1: Japanese Patent Application Laid-open No. 2009-11118

Summary of Invention

Problem to be solved by the Invention

However, the rib formed on the rotor core serves as a path of a leakage flux, which causes another problem that the maximum torque is reduced. That is, the maximum torque and the strength to withstand the centrifugal force of the rotor core obtained by the rib formed on the rotor core are in a trade-off relationship.
The present disclosure has been made in view of the above, and an object of the present disclosure is to provide a synchronous reluctance motor capable of preventing a reduction in maximum torque while maintaining strength to withstand centrifugal force of a rotor core.

Means to Solve the Problem

In order to solve the above problem and achieve the object, a synchronous reluctance motor according to the present disclosure includes: a stator core that has an annular shape and is formed with a plurality of slots arranged at equal intervals along an inner peripheral surface thereof; windings housed in the slots; and a rotor core formed in the shape of a cylinder on an inner surface side of the stator core. The rotor core includes: openings each formed by two arcs that are convex toward a cylinder center in each magnetic pole when viewed in a direction of a central axis of the cylinder, the two arcs having centers located on a q-axis of the magnetic pole and having two radii of different lengths; and a plurality of slits in which the opening is divided by a center rib. Slit groups each including the plurality of the slits are layered toward the cylinder center in each magnetic pole. When a slit interval is an angle formed by center points of the slits adjacent to each other with respect to the cylinder center of the rotor core, and a slot interval is an angle formed between the slots adjacent to each other in the stator core, the slit interval is smaller than the slot interval, the center points each being a midpoint in a circumferential direction of an arc-shaped end, which is along an outer peripheral surface of the rotor core, of an arc-shaped opening of the slit that is closest to an outer periphery of the rotor core. In the rotor core, at least three layers of the slit groups are formed, and at least two layers of the at least three layers of the slit groups are provided with side ribs that further divide the slit divided by the center rib. An average magnetic path width that is on a q-axis side of a layer in which the side ribs are provided first when a plurality of the slit groups is viewed from the q-axis side to a d-axis side is larger than an average magnetic path width that is on the d-axis side of the layer in which the side ribs are provided first.

Effects of the Invention

The synchronous reluctance motor according to the present disclosure is capable of preventing a reduction in the maximum torque while maintaining the strength to withstand the centrifugal force of the rotor core.

Brief Description of Drawings

FIG. 1 is a diagram illustrating a schematic configuration of a drive apparatus for driving a synchronous reluctance motor according to a first embodiment.

FIG. 2 is a cross-sectional view of the synchronous reluctance motor according to the first embodiment, the cross-sectional view being taken along an axis of a shaft.

FIG. 3 is a cross-sectional view of the synchronous reluctance motor illustrated in FIG. 2, the cross-sectional view being taken along line A-A in FIG. 2.

FIG. 4 is a cross-sectional view illustrating one magnetic pole of the synchronous reluctance motor having six poles and 54 slots illustrated in FIG. 3.

FIG. 5 is a cross-sectional view for explaining the arrangement of slits in a rotor core illustrated in FIG. 4.

FIG. 6 is a cross-sectional view for explaining shapes and positions of the slits in the rotor core illustrated in FIGS. 4 and 5.

FIG. 7 is a cross-sectional view for explaining positions of a center rib and side ribs in the slits illustrated in FIGS. 4 to 6.

FIG. 8 is a cross-sectional view for explaining a definition of an average magnetic path width in the rotor core of the first embodiment.

FIG. 9 is a graph for explaining a relationship between a magnitude relationship between the average magnetic path widths $W_{t2-3}$ and $W_{t3-4}$ and stress generated in the rotor core in the synchronous reluctance motor according to the first embodiment.

FIG. 10 is a graph for explaining a relationship between the magnitude relationship between the average magnetic path widths $W_{t2-3}$ and $W_{t3-4}$ and the maximum torque obtained by the rotor core in the synchronous reluctance motor according to the first embodiment.

FIG. 11 is a graph for explaining a relationship between the magnitude relationship between the average magnetic path widths $W_{t2-3}$ and $W_{t3-4}$ and a torque/stress ratio in the synchronous reluctance motor according to the first embodiment.

FIG. 12 is a graph for explaining a relationship between a magnitude relationship between the average magnetic path widths $W_{t2-3}$ and $W_{t5-6}$ and the torque/stress ratio in the synchronous reluctance motor according to the first embodiment.

FIG. 13 is a cross-sectional view of the rotor core illustrating a first example of a structure different from that in FIG. 8.

FIG. 14 is a graph for explaining a relationship between a magnitude relationship between a ratio $W_{t2-3}/W_{t3-4}$ of the average magnetic path widths $W_{t2-3}$ and $W_{t3-4}$ and a ratio $W_{t3-4}/W_{t4-5}$ of the average magnetic path widths $W_{t3-4}$ and $W_{t4-5}$ and the torque/stress ratio in the rotor core having the structure of FIG. 13.

FIG. 15 is a cross-sectional view of the rotor core illustrating a second example of the structure different from that in FIG. 8.

FIG. 16 is a graph for explaining a relationship between a magnitude relationship among the ratio $W_{t2-3}/W_{t3-4}$ of the average magnetic path widths $W_{t2-3}$ and $W_{t3-4}$, the ratio $W_{t3-4}/W_{t4-5}$ of the average magnetic path widths $W_{t3-4}$ and $W_{t4-5}$, and a ratio $W_{t4-5}/W_{t5-6}$ of the average magnetic path widths $W_{t4-5}$ and $W_{t5-6}$ and the torque/stress ratio in the rotor core having the structure of FIG. 15.

FIG. 17 is a cross-sectional view for explaining a definition of a rib width in the rotor core of the first embodiment.

FIG. 18 is a graph for explaining an influence of the rib width on a relationship between the ratio $W_{t3-4}/W_{t4-5}$ of the average magnetic path widths $W_{t3-4}$ and $W_{t4-5}$ and the torque/stress ratio in the rotor core having the structure of FIG. 13.

FIG. 19 is a cross-sectional view illustrating one magnetic pole of a synchronous reluctance motor having six poles and 36 slots according to a second embodiment.

FIG. 20 is a graph for explaining a relationship between a magnitude relationship between the average magnetic path widths $W_{t1-2}$ and $W_{t2-3}$ and the torque/stress ratio in the synchronous reluctance motor according to the second embodiment.

Description of Embodiments

Hereinafter, with reference to the drawings, a synchronous reluctance motor and a drive apparatus for a railroad vehicle according to embodiments of the present disclosure will be described in detail. Note that in the following embodiments, the synchronous reluctance motor suitable for use in driving a railroad vehicle will be described as an example, which however is not intended to exclude application to other uses. Moreover, in the drawings, the ease of understanding is given priority so that the scale of each member may be different from the actual scale. This is also true between the drawings.

First Embodiment.

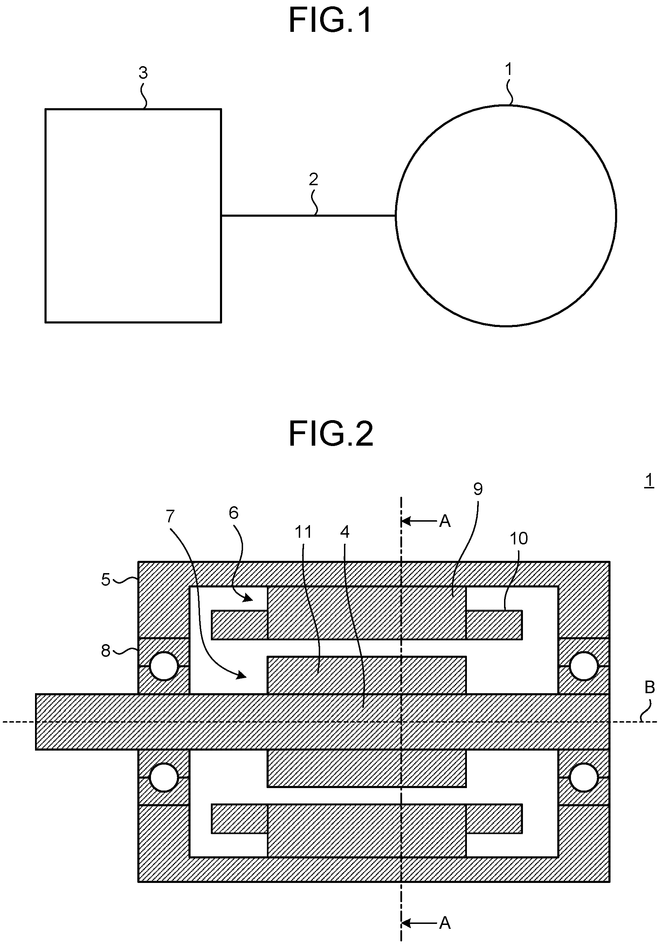

FIG. 1 is a diagram illustrating a schematic configuration of a drive apparatus for driving a synchronous reluctance motor 1 according to a first embodiment. In FIG. 1, the synchronous reluctance motor 1 is connected to a controller 3 via a power supply line 2. The synchronous reluctance motor 1 operates as an electric machine that converts electric energy supplied from the controller 3 into mechanical energy. The drive apparatus illustrated in FIG. 1 can be used as a drive apparatus for a railroad vehicle.

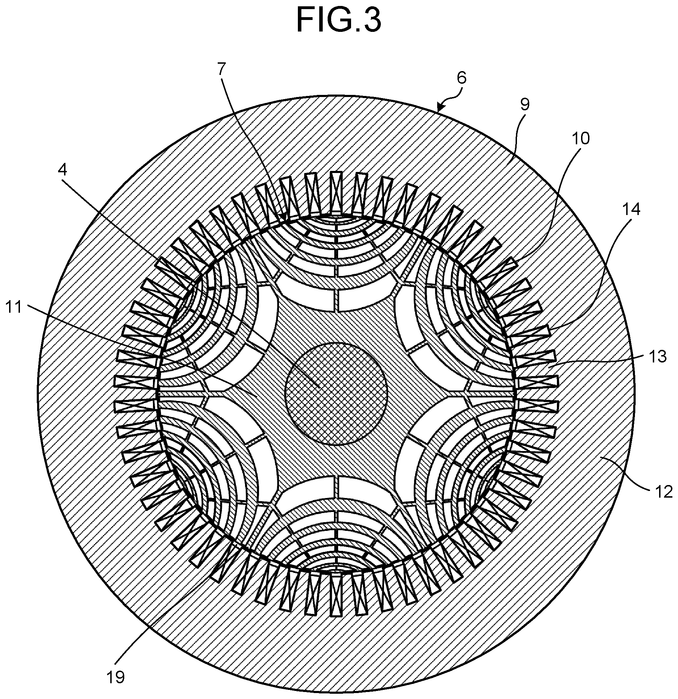

FIG. 2 is a cross-sectional view of the synchronous reluctance motor 1 according to the first embodiment, the cross-sectional view being taken along an axis of a shaft 4. A broken line "B" illustrated in FIG. 2 is the axis of the shaft 4. FIG. 3 is a cross-sectional view of the synchronous reluctance motor 1 illustrated in FIG. 2, the cross-sectional view being taken along line A-A in FIG. 2. Note that in FIG. 3, a frame 5 is not illustrated.

The synchronous reluctance motor 1 includes a stator 6 having an annular shape and a rotor 7 having a cylindrical shape that are inserted into and fixed in the frame 5 by a method such as press fitting or shrink fitting. The stator 6 having the annular shape and the rotor 7 having the cylindrical shape are disposed so as to be relatively rotatable via a magnetic gap 19, which is a mechanical gap, using a bearing 8.

The stator 6 is formed by arranging windings 10 in a stator core 9 made of an iron core and having an annular shape. The rotor 7 is formed by inserting the shaft 4 into the center of a rotor core 11, which is made of an iron core and has a cylindrical shape, by a method such as press fitting or shrink fitting, and integrating the shaft 4 with the rotor core 11.

The stator core 9 includes a core back 12 having an annular shape and teeth 13 protruding radially inward from the core back 12 and arranged at equal intervals. Among the plurality of the teeth 13 provided on the radially inner side of the stator core 9, a plurality of slots 14 is formed at equal intervals. The windings 10 are housed in the slots 14. Moreover, the teeth 13 and the slots 14 are provided at the same angle in a circumferential direction of the annular shape.

In FIG. 3, when "P" is the number of magnetic poles of the rotor core 11 and "S" is the number of slots provided in the stator core 9, the numbers are P=6 and S=54. That is, FIG. 3 illustrates a cross-sectional structure of the synchronous reluctance motor 1 having six poles and 54 slots. Note that the number of slots and the number of magnetic poles illustrated in FIG. 3 are examples, and are not limited to the example of FIG. 3.

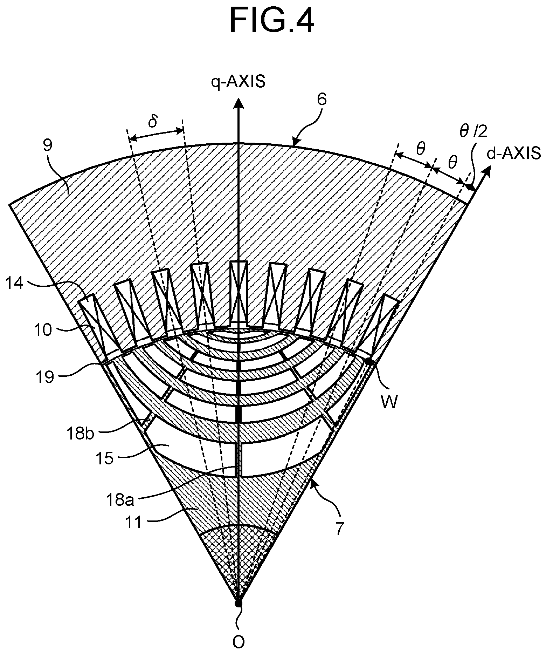

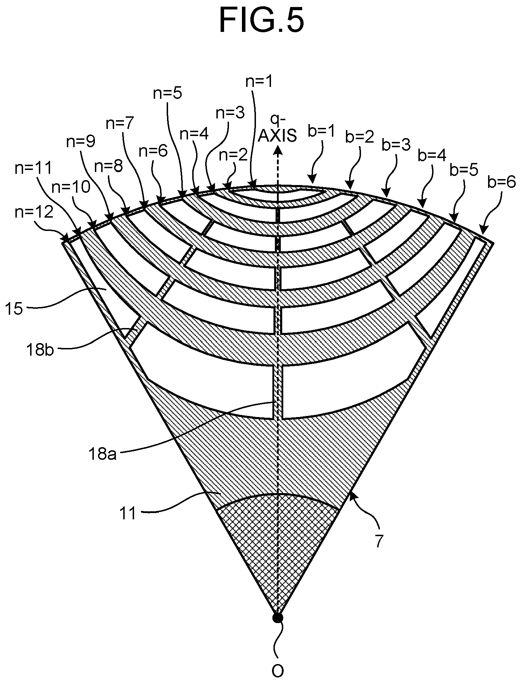

FIG. 4 is a cross-sectional view illustrating one magnetic pole of the synchronous reluctance motor 1 having six poles and 54 slots illustrated in FIG. 3, and is an enlarged view of a one-sixth of the region of FIG. 3. FIG. 5 is a cross-sectional view for explaining the arrangement of slits 15 in the rotor core 11 illustrated in FIG. 4.

First, as illustrated in FIG. 4, the stator 6 of the synchronous reluctance motor 1 having six poles and 54 slots includes nine of the slots 14 per magnetic pole. In FIG. 4, on the cross section of the stator core 9 and the rotor core 11, a d-axis is defined in a direction of a center line of the magnetic pole, and a q-axis is defined in a direction of a center line between the magnetic poles. The direction of the center line of the magnetic pole is a direction in which a magnetic flux passes easily, and the direction of the center line between the magnetic poles is a direction in which a magnetic flux passes less easily. The d-axis direction may be referred to as a "salient pole direction", and the q-axis direction may be referred to as a "non-salient pole direction".

The d-axis and the q-axis have a phase difference of 90 degrees electrically. The rotor 7 rotates by inductance torque generated from a difference in inductance between the d-axis direction and the q-axis direction. That is, the synchronous reluctance motor 1 generates output torque by using a difference in magnetic resistance in a direction of rotation. Therefore, in the synchronous reluctance motor 1, the larger the difference in inductance between the d-axis and the q-axis becomes, the higher the output torque can be obtained.

In FIGS. 4 and 5, when viewed in a direction of a central axis of the cylinder, the rotor core 11 is provided with a plurality of the slits 15 formed by arc-shaped openings that are convex toward a cylinder center "O" of the rotor core 11 in each magnetic pole of the rotor core 11 and have apices located on the q-axis of the magnetic pole. Space is formed in the rotor core 11 by the plurality of the slits 15. That is, with the slits 15, the rotor core 11 has a structure in which a magnetic portion and a non-magnetic portion alternate, the magnetic portion being made of a magnetic material that is a material of an electromagnetic steel sheet, the non-magnetic portion being formed by air.

Moreover, in FIG. 4, with respect to the d-axis passing through the cylinder center "O" of the rotor core 11, a midpoint in a circumferential direction of an arc-shaped end, which is along an outer peripheral surface of the rotor core 11, of the arc-shaped opening of the slit 15 closest to an outer periphery of the rotor core 11 is defined as a center point "W". Also, an angle formed by the center points "W" of the slits 15 adjacent to each other in one magnetic pole with respect to the cylinder center "O" of the rotor core 11 is defined as "θ".

At this time, the slits 15 are provided such that the angle θ formed by the center points "W" of the adjacent slits is equal across the slits adjacent to each other. Furthermore, an angle formed by the d-axis and a straight line connecting the center point "W" of the slit 15 closest to the d-axis and the cylinder center "O" of the rotor core 11 is set to be θ/2. Specifically, in the configuration of FIG. 4, θ=5.0 (=360/72) degrees is set. In the present description, the angle θ may be referred to as a "slit interval θ", and the number of the angles θ throughout the circumference of the rotor core 11 may be referred to as the "number of pitches". In the case of the structure of FIG. 4, the number of pitches is 72.

Moreover, in FIG. 4, an angle formed between the slots adjacent to each other is referred to as a "slot interval" and is represented by "$\delta$". In the case of the structure of FIG. 4, the number of slots is S=54, and the slot interval is $\delta$=6.67 (=360/54) degrees. Therefore, in the case of the structure of FIG. 4, the slit interval $\theta$ and the slot interval $\delta$ satisfy a relationship of $\theta<\delta$. Note that another embodiment described later also maintains the relationship of $\theta<\delta$.

Note that FIG. 4 has illustrated, as an example, the case where the slit interval $\theta$ is equal across the slits adjacent to each other throughout the circumference of the rotor core 11. On the other hand, the gist of the first embodiment is that the slit interval $\theta$ is adjusted by the concept of a "magnetic path width" described later. Details will be described later. Note that even when the slit interval $\theta$ is adjusted, the relationship of $\theta<\delta$ is maintained.

Moreover, reference character "b" illustrated in FIG. 5 indicates a number assigned to a layer of the slit 15 provided for each magnetic pole. In FIG. 5, a layer closest to the q-axis of the rotor core 11 is assigned b=1, and is referred to as a "first layer". Then, from the first layer of the slit 15 toward the d-axis, layers are assigned numbers b=2 to 6 and are referred to as a "second layer" to a "sixth layer", respectively. That is, in the structure of FIG. 5, the layers provided with the slits 15 include six layers being the first layer to the sixth layer in order from the q-axis side. Note that although b=6 is set in the example of FIGS. 3 to 5, the present disclosure is not limited to this example. It is sufficient to set a number necessary for the slit interval $\theta$ to satisfy the relationship of $\theta<\delta$ described above, and b=5 may be set in the example of FIG. 5.

As for reference character "n" illustrated in FIG. 5, an odd number thereof indicates a number assigned to an arc of an edge that is an outer edge of the slit 15 provided for each magnetic pole and is farther from the cylinder center "O", and an even number thereof indicates a number assigned to an arc of an edge that is an inner edge of the slit 15 and is closer to the cylinder center "O". For example, the outer edge of the slit 15 of a b-th layer is the arc of n=2b-1, and the inner edge of the slit 15 of the b-th layer is the arc of n=2b. The arcs illustrated in FIG. 5 correspond to six slit layers and can take values of n=1 to 12.

As described above, the rotor core 11 needs to have the strength enough to withstand the centrifugal force when the rotor 7 rotates. Therefore, in each of the slits 15 from the first layer to the sixth layer, a center rib 18a acting as a strength member is formed. Moreover, in each of the slits 15 from the third layer to the sixth layer, in addition to the center rib 18a, two side ribs 18b also acting as strength members are formed. The center rib 18a and the side ribs 18b can be formed by leaving portions to be the center rib 18a and the side ribs 18b in stamping a steel sheet to form the slit 15.

As described above, only the center rib 18a is formed in each of the slits 15 of the first layer and the second layer, and the center rib 18a and the side ribs 18b are formed in each of the slits 15 of the third layer to the sixth layer. In the present description, a plurality of the slits 15 in each layer is collectively referred to as a "slit group". That is, the first layer to the sixth layer each have the slit group including the plurality of the slits 15 divided by the center rib 18a or the side ribs 18b. As a result, the first layer to the sixth layer are each provided with the center rib 18a dividing the slit 15 of each slit group, and the third layer to the sixth layer are each provided with the side ribs 18b further dividing the slits 15 divided by the center rib 18a. Moreover, in each layer, the slits 15 belonging to each slit group are provided so as to be symmetric with respect to the q-axis for each magnetic pole.

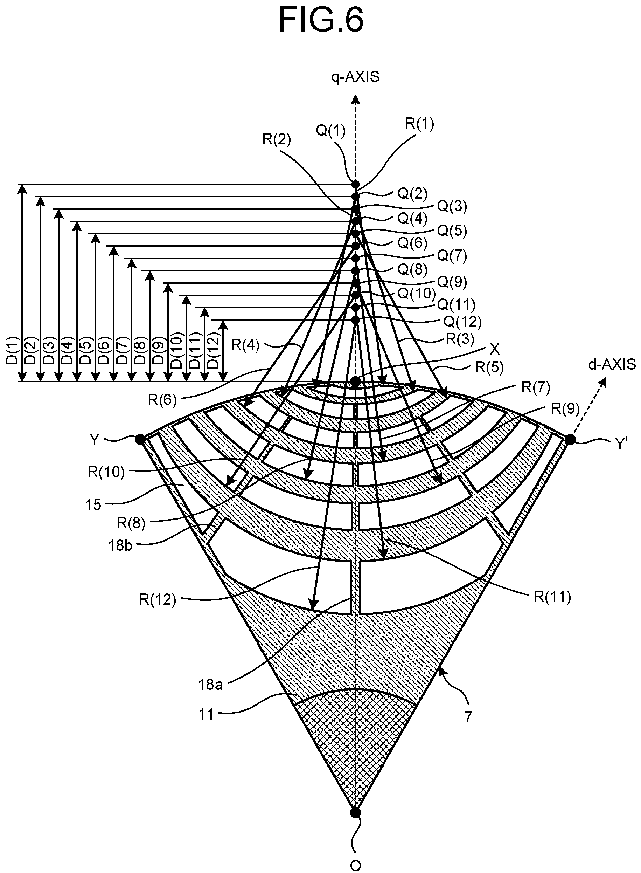

FIG. 6 is a cross-sectional view for explaining shapes and positions of the slits 15 in the rotor core 11 illustrated in FIGS. 4 and 5. As described above, the plurality of the slits 15 includes the arc-shaped opening whose apex is located on the q-axis of the magnetic pole. Each arc has an arc center "Q" at a position that is on the q-axis and a distance "D" from the outer peripheral surface of the cylinder of the rotor core 11. In addition, a radius of an n-th arc having the arc center Q (n) is defined as R (n), and the distance "D" determined by the n-th arc is defined as D (n). Note that "n" is the number assigned to the arc illustrated in FIG. 5. Here, a ratio between the distance D (n) and the radius R (n) of the n-th arc is defined as k (n), and the ratio k (n) between the distance D (n) and the radius R (n) is defined by the following Formula (1).

$$k(n)=D(n)/R(n) \quad \cdots (1)$$

The distance D (n) is a constant determined by the n-th arc, and the value that the radius R (n) of the n-th arc can take changes with the ratio k (n) of the n-th arc. Note that the ratio k (n) satisfies the relationship of the following Formula (2).

$$k(nmax)<\cdots<k(n)<\cdots<k(1)<1 \quad \cdots (2)$$

In the above Formula (2), "nmax" is the maximum number that can be assigned to the arc. Note that regarding the arc, a shape closely mimicking the arc shape with a straight line or the like is also regarded as a shape similar to the arc.

Moreover, when the slits 15 of the sixth layer are formed with the radius R (12) of the arc, the outer edges of the slits 15 extend outside its own magnetic pole toward the adjacent magnetic pole. Therefore, as illustrated in each of FIGS. 4 to 6, the outer edges of the slits 15 are formed at a certain distance from the d-axis so as to fit within its own magnetic pole without extending outside its own magnetic pole toward the adjacent magnetic pole.

Next, a method of determining the distance D (n), the radius R (n), and the ratio k (n) will be described. First, a point corresponding to the radius of the rotor 7 on the q-axis illustrated in FIG. 6 is defined as a point X, and points at which an nmax-th arc intersects the outer peripheral surface of the rotor core 11 are defined as a point Y and a point Y'. When the maximum number of slit layers is "bmax", the maximum number "nmax" that the arc can take is determined by the maximum number "bmax".

Since the radius R (nmax) of the nmax-th arc is a circle passing through the point Y and the point Y' and has the arc center "Q" on the q-axis, when the ratio k (nmax) is determined, the radius R (nmax) and the distance D (nmax) of the nmax-th arc are determined on the basis of the above Formula (1).

Note that FIG. 6 illustrates a case where D(1)>D(2)> ·······>D(11)>D(12), but the distances do not necessarily have to be in the order of FIG. 6, and the distance D (n) need only be determined so as to satisfy the above Formulas (1) and (2).

As described above, the rotor core 11 is formed in the shape of the cylinder on the inner surface side of the stator core 9, and includes the openings each formed by two arcs that are convex toward the cylinder center in each magnetic pole when viewed in the direction of the central axis of the cylinder, the two arcs having the centers located on the q-axis of the magnetic pole and having two radii of different lengths. In addition, the rotor core 11 includes the plurality of the slits 15 in which the opening is divided by the center rib 18a, and the slit groups each including the plurality of the slits 15 are layered toward the cylinder center in each magnetic pole.

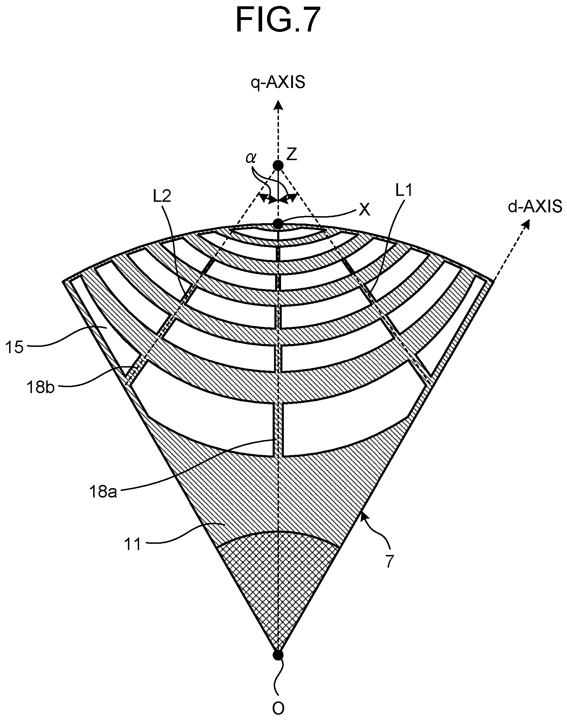

FIG. 7 is a cross-sectional view for explaining positions of the center rib 18a and the side ribs 18b in the slits 15 illustrated in FIGS. 4 to 6. First, the center rib 18a is provided on the q-axis in each of the first layer to the sixth layer. The side ribs 18b are formed at positions where straight lines L1 and L2 radially extending toward the rotor core 11 and the slits 15 in the third layer to the sixth layer intersect each other, the straight lines L1 and L2 each forming an angle $\alpha$ with the q-axis with respect to the center that is a point Z on the q-axis located outside the point X corresponding to the radius of the rotor 7 on the q-axis. Note that the side ribs 18b formed in the third layer to the sixth layer do not necessarily have to be formed in a straight line along the straight line L1 or the straight line L2, and may be formed to be offset to the left or right from the straight line L1 or the straight line L2.

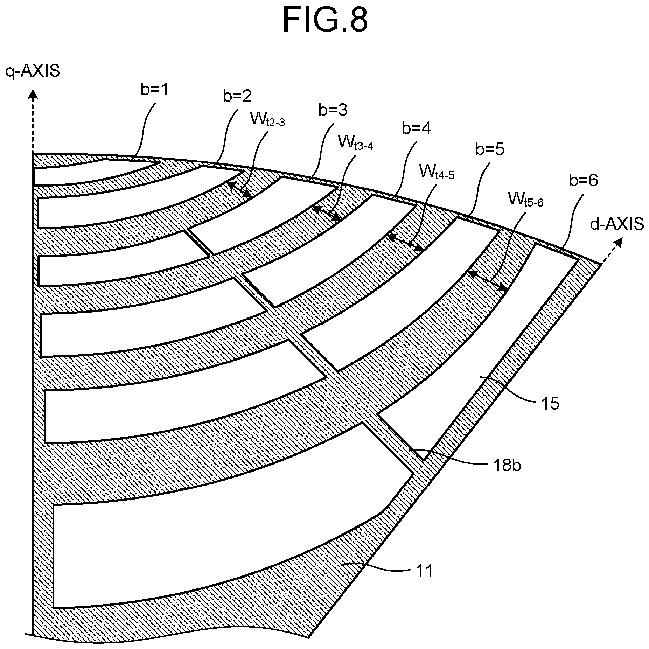

Next, a configuration of a main part according to the first embodiment will be described. FIG. 8 is a cross-sectional view for explaining a definition of an average magnetic path width in the rotor core 11 of the first embodiment. Note that since the slits 15 in the rotor core 11 are positioned symmetrically with respect to the q-axis, FIG. 8 illustrates only the right half of the slits 15 on the right of the q-axis. The subsequent drawings are also illustrated similarly.

As described above, in the rotor core 11 of the first embodiment, the side ribs 18b are not formed in the slits 15 of the first layer and the second layer, and the side ribs 18b are formed in the slits 15 of the third layer to the sixth layer. In the layers, the portions of the magnetic material between the layers serve as magnetic paths through which a magnetic flux flows. Here, a magnetic path width between the layers varies between the layers of the same layer numbers. Therefore, in the present description, an average value of the magnetic path width between the q-axis and the outer periphery of the rotor core 11 is referred to as the "average magnetic path width". Under this definition, the average magnetic path width between the slit group of the second layer and the slit group of the third layer is represented by "$W_{t2-3}$". Similarly, the average magnetic path width between the slit group of the third layer and the slit group of the fourth layer is represented by "$W_{t3-4}$", the average magnetic path width between the slit group of the fourth layer and the slit group of the fifth layer is represented by "$W_{t4-5}$", and the average magnetic path width between the slit group of the fifth layer and the slit group of the sixth layer is represented by "$W_{t5-6}$".

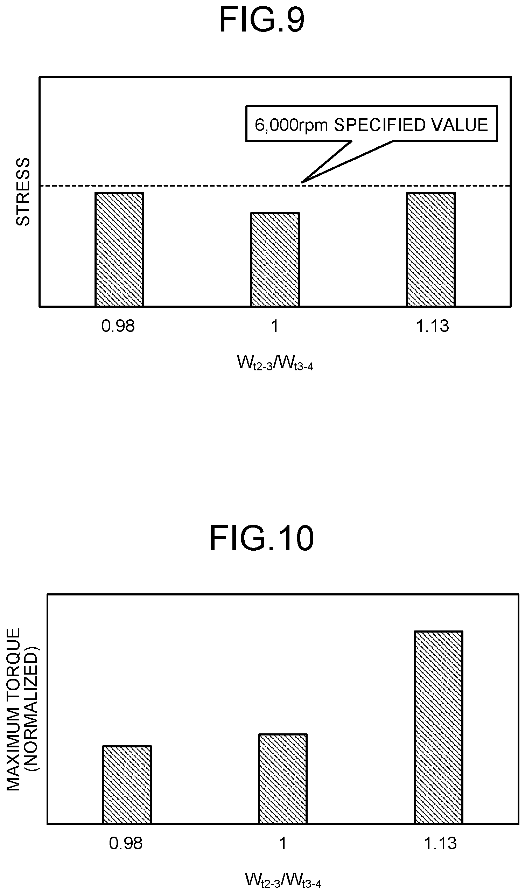

Next, a result of an electromagnetic field analysis by a finite element method performed on the rotor core 11 of the first embodiment will be described. First, in order to examine an influence of a magnitude relationship between the average magnetic path widths $W_{t2-3}$ and $W_{t3-4}$ in FIG. 8 on the rotor core 11 of the synchronous reluctance motor 1, the stress generated in the rotor core 11 and the maximum torque obtained by the rotor core 11 were determined by the electromagnetic field analysis and summarized as in FIGS. 9 to 11. Note that the stress here means the maximum value of the stress generated in the rotor core 11. The stress is maximized in an area where the strength to withstand the centrifugal force is the lowest, and the stress is introduced as an index representing the strength to withstand the centrifugal force of the rotor core 11.

FIG. 9 is a graph for explaining a relationship between the magnitude relationship between the average magnetic path widths $W_{t2-3}$ and $W_{t3-4}$ and the stress generated in the rotor core 11 in the synchronous reluctance motor 1 according to the first embodiment. The horizontal axis in FIG. 9 represents "$W_{t2-3}/W_{t3-4}$", which is a ratio of the average magnetic path width $W_{t2-3}$ to the average magnetic path width $W_{t3-4}$, and the vertical axis in FIG. 9 represents the value of the stress generated in the rotor core 11.

A broken line illustrated in FIG. 9 indicates a specified value that the stress should not exceed when the synchronous reluctance motor 1 is rotated at 6,000 rpm. The rotation speed of 6,000 rpm is the maximum speed anticipated when the synchronous reluctance motor 1 is used for driving a railroad vehicle. As illustrated in FIG. 9, in the case where the synchronous reluctance motor 1 is rotated at 6,000 rpm, a variable range of the ratio $W_{t2-3}/W_{t3-4}$ is approximately 0.98 or higher and 1.13 or lower when the ratio $W_{t2-3}/W_{t3-4}$ is varied while a certain margin is secured. FIG. 9 illustrates that when the ratio $W_{t2-3}/W_{t3-4}$ is 1, that is, when the average magnetic path width $W_{t2-3}$ is equal to the average

magnetic path width $W_{t3-4}$, the stress is minimized.

FIG. 10 is a graph for explaining a relationship between the magnitude relationship between the average magnetic path widths $W_{t2-3}$ and $W_{t3-4}$ and the maximum torque obtained by the rotor core 11 in the synchronous reluctance motor 1 according to the first embodiment. The horizontal axis in FIG. 10 represents the ratio $W_{t2-3}/W_{t3-4}$, and the vertical axis in FIG. 10 represents a value obtained by normalizing the maximum torque when the ratio $W_{t2-3}/W_{t3-4}$ is changed with the maximum torque when the ratio $W_{t2-3}/W_{t3-4}$ is 1. FIG. 10 illustrates that the maximum torque increases when the ratio $W_{t2-3}/W_{t3-4}$ is larger than 1, and the maximum torque decreases when the ratio $W_{t2-3}/W_{t3-4}$ is smaller than 1.

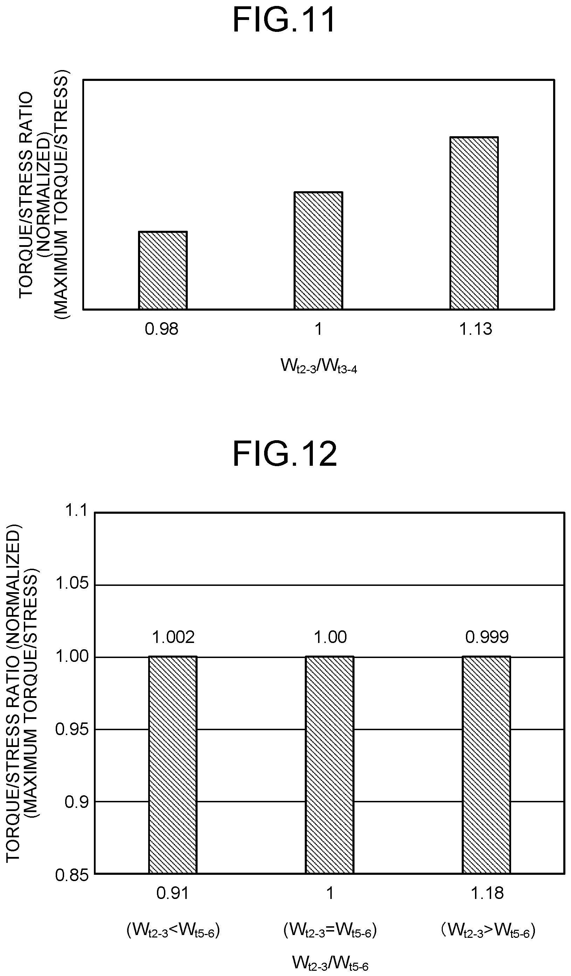

FIG. 11 is a graph for explaining a relationship between the magnitude relationship between the average magnetic path widths $W_{t2-3}$ and $W_{t3-4}$ and a torque/stress ratio in the synchronous reluctance motor 1 according to the first embodiment. The torque/stress ratio represents a ratio of the maximum torque to the stress. The horizontal axis in FIG. 11 represents the ratio $W_{t2-3}/W_{t3-4}$, and the vertical axis in FIG. 11 represents a value obtained by normalizing the torque/stress ratio (maximum torque/stress) when the ratio $W_{t2-3}/W_{t3-4}$ is changed with the torque/stress ratio when the ratio $W_{t2-3}/W_{t3-4}$ is 1. FIG. 11 illustrates that the torque/stress ratio is larger when the ratio $W_{t2-3}/W_{t3-4}$ is 1 than when the ratio $W_{t2-3}/W_{t3-4}$ is 0.98, and the torque/stress ratio is larger when the ratio $W_{t2-3}/W_{t3-4}$ is 1.13 than when the ratio $W_{t2-3}/W_{t3-4}$ is 1.

The analysis results of FIGS. 9 to 11 will be examined. First, in the case of the structure in FIG. 8, the average magnetic path width $W_{t2-3}$ is the average magnetic path width of the magnetic path on the q-axis side in the layer in which the side rib 18b is provided first when the plurality of the slit groups is viewed from the q-axis side to the d-axis side. The average magnetic path width $W_{t3-4}$ is the average magnetic path width of the magnetic path on the d-axis side in the layer in which the side rib 18b is provided first. Therefore, it can be explained that when the average magnetic path width $W_{t2-3}$ that is on the q-axis side of the layer in which the side rib 18b is provided first is made larger than the average magnetic path width $W_{t3-4}$ that is on the d-axis side of that layer, the torque/stress ratio can be improved.

Next, reasons why the above results are obtained will be described. First, when the average magnetic path width $W_{t2-3}$ is increased, the amount of the iron core increases so that, in the area in which the average magnetic path width $W_{t2-3}$ is increased and an area therearound, the stress is increased. Meanwhile, in the case of the structure in FIG. 8, the side ribs 18b are provided in the slit groups in the third to sixth layers, and thus the third to sixth layers have a structure in which the rotor core 11 is supported by the two types of ribs being the center rib 18a and the side ribs 18b. Therefore, it is thought that the areas with high stress are dispersed within the rotor core 11, and the maximum stress is hardly increased by the increase in the amount of the iron core of the average magnetic path width $W_{t2-3}$. Also, since the amount of the iron core is increased, it is thought that magnetic saturation of the rotor core 11 is reduced and that the maximum torque is improved.

Although details of the analysis result are omitted, a result is also obtained in which, in the rotor core 11 having the structure of FIG. 8, when the ratio $W_{t2-3}/W_{t3-4}$ is 1.13, the maximum stress is generated in an area more distant than the side rib 18b in the third layer such as the side rib 18b in the sixth layer. Thus, an influence of a magnitude relationship between the average magnetic path widths $W_{t2-3}$ and $W_{t5-6}$ in FIG. 8 on the torque/stress ratio was examined.

FIG. 12 is a graph for explaining a relationship between the magnitude relationship between the average magnetic path widths $W_{t2-3}$ and $W_{t5-6}$ and the torque/stress ratio in the synchronous reluctance motor 1 according to the first embodiment. The horizontal axis in FIG. 12 represents the ratio $W_{t2-3}/W_{t5-6}$, and the vertical axis in FIG. 12 represents a value obtained by normalizing the torque/stress ratio (maximum torque/stress) when the ratio $W_{t2-3}/W_{t5-6}$ is changed with the torque/stress ratio when the ratio $W_{t2-3}/W_{t5-6}$ is 1.

FIG. 12 illustrates that the torque/stress ratio hardly changes even when the ratio $W_{t2-3}/W_{t5-6}$ is changed. This result is thought to be due to the fact that, for example, even when the ratio $W_{t2-3}/W_{t5-6}$ is increased or decreased without changing the value of the average magnetic path width $W_{t2-3}$, the direction of increase or decrease in the maximum torque coincides with the direction of increase or decrease in the stress. On the other hand, as illustrated in the result of FIG. 11, in the case of the ratio $W_{t2-3}/W_{t3-4}$, the direction of increase or decrease in the maximum torque is opposite to the direction of increase or decrease in the stress, whereby it is thought that the torque/stress ratio increases when the ratio $W_{t2-3}/W_{t3-4}$ is increased.

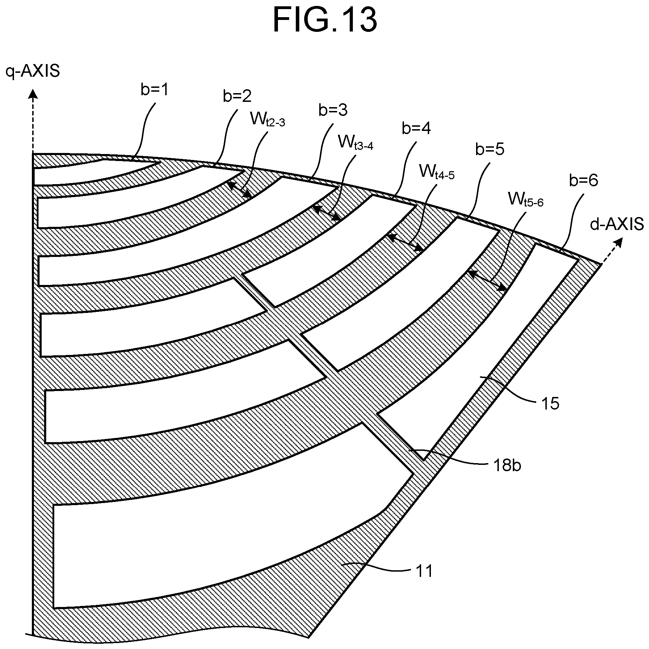

In the above description, on the basis of the analysis result for the rotor core 11 having the structure of FIG. 8, it has been described that when the average magnetic path width $W_{t2-3}$ that is on the q-axis side of the layer in which the side rib 18b is provided first is made larger than the average magnetic path width $W_{t3-4}$ that is on the d-axis side of that layer, the torque/stress ratio can be improved. To see whether this idea is valid, other exemplary structures were examined. FIG. 13 is a cross-sectional view of the rotor core 11 illustrating a first example of the structure different from that in FIG. 8.

FIG. 8 has the structure in which the side ribs 18b are formed in the slit groups from the third layer to the sixth layer, whereas FIG. 13 has a structure in which the side ribs 18b are formed in the slit groups from the fourth layer to the sixth layer. That is, in FIG. 13, the side rib 18b is not provided in the slit group of the third layer, and the layer in which the side rib 18b is provided first is the fourth layer. The definition of the average magnetic path width is similar to that in the case of FIG. 8.

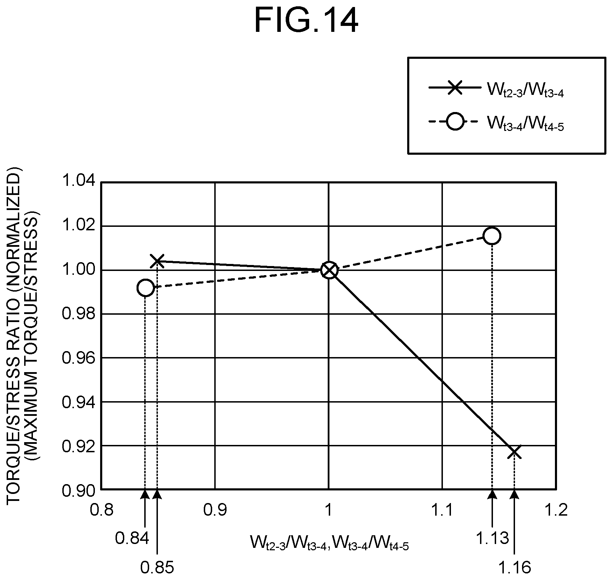

FIG. 14 is a graph for explaining a relationship between a magnitude relationship between the ratio $W_{t2-3}/W_{t3-4}$ of the average magnetic path widths $W_{t2-3}$ and $W_{t3-4}$ and a ratio $W_{t3-4}/W_{t4-5}$ of the average magnetic path widths $W_{t3-4}$ and

$W_{t4-5}$ and the torque/stress ratio in the rotor core 11 having the structure of FIG. 13. The horizontal axis in FIG. 14 represents the ratio $W_{t2-3}/W_{t3-4}$ and the ratio $W_{t3-4}/W_{t4-5}$, and the vertical axis in FIG. 14 represents a value obtained by normalizing the torque/stress ratio (maximum torque/stress), which is obtained when the value of one of the ratio $W_{t2-3}/W_{t3-4}$ or the ratio $W_{t3-4}/W_{t4-5}$ is changed while the other value is fixed to 1, with the torque/stress ratio when the ratio $W_{t2-3}/W_{t3-4}$ and the ratio $W_{t3-4}/W_{t4-5}$ are both 1. Specifically, a solid line plot is a result when the value of the ratio $W_{t2-3}/W_{t3-4}$ is 0.85, 1, and 1.16 with the value of the ratio $W_{t3-4}/W_{t4-5}$ being fixed to 1, and a broken line plot is a result when the value of the ratio $W_{t3-4}/W_{t4-5}$ is 0.84, 1, and 1.13 with the value of the ratio $W_{t2-3}/W_{t3-4}$ being fixed to 1.

According to the result of FIG. 14, when the ratio $W_{t2-3}/W_{t3-4}$ is increased, similarly to the rotor core 11 having the structure of FIG. 8, unlike the result of FIG. 11, the torque/stress ratio is reduced instead of being improved. Therefore, it can be understood that even when the average magnetic path width $W_{t2-3}$ that is on the q-axis side of the layer in which the side rib 18b is not provided first is made larger than the average magnetic path width $W_{t3-4}$ that is on the d-axis side of that layer, the torque/stress ratio cannot be improved. In addition, according to the result of FIG. 14, when the ratio $W_{t3-4}/W_{t4-5}$ is increased, the torque/stress ratio is improved. Therefore, the rotor core 11 having the structure of FIG. 13 also obtains the result that the torque/stress ratio can be improved when the average magnetic path width that is on the q-axis side of the layer in which the side rib 18b is provided first is made larger than the average magnetic path width that is on the d-axis side of that layer.

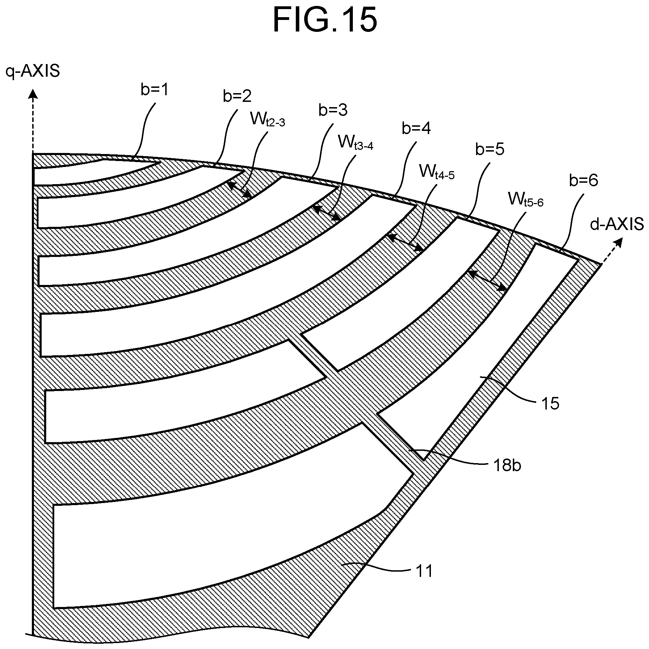

FIG. 15 is a cross-sectional view of the rotor core 11 illustrating a second example of the structure different from that in FIG. 8. FIG. 13 has the structure in which the side ribs 18b are formed in the slit groups from the fourth layer to the sixth layer, whereas FIG. 15 has a structure in which the side ribs 18b are only formed in the slit groups of the fifth layer and the sixth layer. That is, in FIG. 15, the side rib 18b is not provided in the slit groups of up to the fourth layer, and the layer in which the side rib 18b is provided first is the fifth layer. The definition of the average magnetic path width is similar to that in the cases of FIGS. 8 and 13.

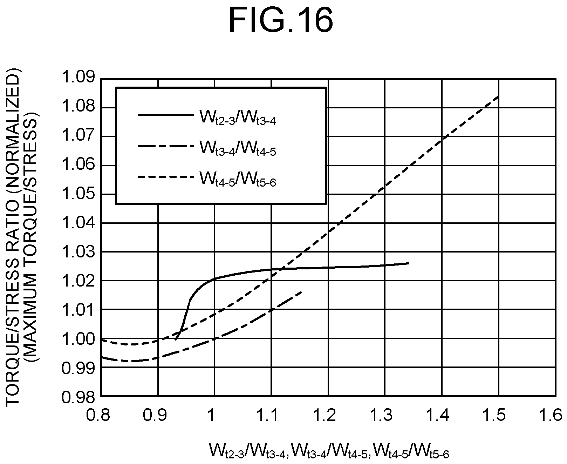

FIG. 16 is a graph for explaining a relationship between a magnitude relationship among the ratio $W_{t2-3}/W_{t3-4}$ of the average magnetic path widths $W_{t2-3}$ and $W_{t3-4}$, the ratio $W_{t3-4}/W_{t4-5}$ of the average magnetic path widths $W_{t3-4}$ and $W_{t4-5}$, and a ratio $W_{t4-5}/W_{t5-6}$ of the average magnetic path widths $W_{t4-5}$ and $W_{t5-6}$ and the torque/stress ratio in the rotor core 11 having the structure of FIG. 15. The horizontal axis in FIG. 16 represents the ratio $W_{t2-3}/W_{t3-4}$, the ratio $W_{t3-4}/W_{t4-5}$, and the ratio $W_{t4-5}/W_{t5-6}$, and the vertical axis in FIG. 16 represents a value obtained by normalizing the values for the ratio $W_{t2-3}/W_{t3-4}$, the ratio $W_{t3-4}/W_{t4-5}$, and the ratio $W_{t4-5}/W_{t5-6}$ with the torque/stress ratio when the value of the ratio $W_{t3-4}/W_{t4-5}$ is 1. Specifically, a solid line represents the torque/stress ratio when the ratio $W_{t2-3}/W_{t3-4}$ is changed, a dash dotted line represents the torque/stress ratio when the ratio $W_{t3-4}/W_{t4-5}$ is changed, and a broken line represents the torque/stress ratio when the ratio $W_{t4-5}/W_{t5-6}$ is changed. Note that when one ratio is changed to a value other than 1, the other two ratios are fixed to the value of 1.

According to the result of FIG. 16, when the ratio $W_{t4-5}/W_{t5-6}$ is increased, the torque/stress ratio is improved. Therefore, the rotor core 11 having the structure of FIG. 15 also obtains the result that the torque/stress ratio can be improved when the average magnetic path width that is on the q-axis side of the layer in which the side rib 18b is provided first is made larger than the average magnetic path width that is on the d-axis side of that layer.

Note that, in the result of FIG. 16, when the ratio $W_{t3-4}/W_{t4-5}$ is increased, the torque/stress ratio also tends to be improved, but when the ratio $W_{t3-4}/W_{t4-5}$ is increased, the stress may exceed the specified value when the synchronous reluctance motor is rotated at 6,000 rpm. For this reason, in an application with a margin in the strength to withstand the centrifugal force, an option that the ratio $W_{t3-4}/W_{t4-5}$ is increased may be taken. On the other hand, when the synchronous reluctance motor 1 is used for driving a railroad vehicle, a preferred embodiment is to increase the ratio $W_{t4-5}/W_{t5-6}$ rather than increasing the ratio $W_{t3-4}/W_{t4-5}$.

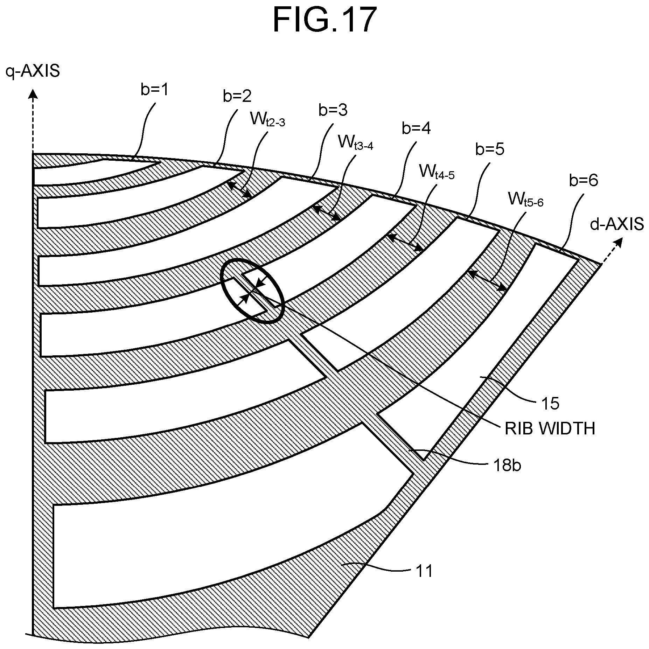

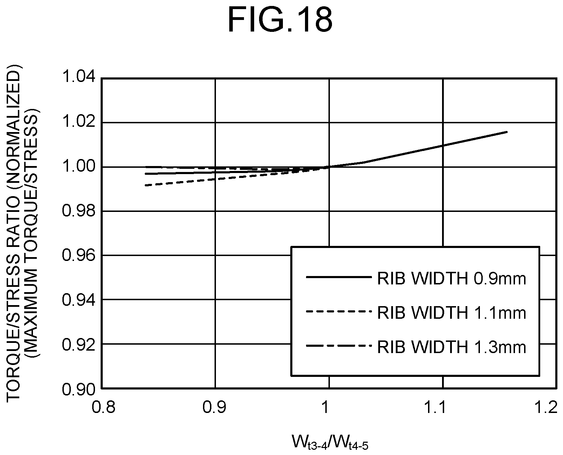

The first embodiment has further examined an influence of a rib width, which is the width in a lateral direction of the side rib 18b, on the torque/stress ratio. FIG. 17 is a cross-sectional view for explaining a definition of the rib width in the rotor core 11 of the first embodiment. FIG. 18 is a graph for explaining the influence of the rib width on a relationship between the ratio $W_{t3-4}/W_{t4-5}$ of the average magnetic path widths $W_{t3-4}$ and $W_{t4-5}$ and the torque/stress ratio in the rotor core 11 having the structure of FIG. 13.

FIGS. 17 and 18 are elaborated on below. The structure of the rotor core 11 in FIG. 17 is the same as that illustrated in FIG. 13. In the analysis result of FIG. 18, the side rib 18b in the fourth layer in which the side rib 18b is provided first as illustrated in FIG. 17 has the rib width of 0.9 mm, 1.1 mm, and 1.3 mm in three cases. The rib width of 0.9 mm is set as the minimum value anticipated when stamping the portion of the slit 15 out of the steel sheet while leaving the portion of the side rib 18b. Also, as the ratio of the average magnetic path widths of interest, the ratio $W_{t3-4}/W_{t4-5}$ of the average magnetic path widths $W_{t3-4}$ and $W_{t4-5}$, which are thought to be easily influenced by the side rib 18b in the fourth layer, was selected. Moreover, in FIG. 18, a solid line represents the torque/stress ratio when the rib width is 0.9 mm, a broken line represents the torque/stress ratio when the rib width is 1.1 mm, and a dash dotted line represents the torque/stress ratio when the rib width is 1.3 mm, where each torque/stress ratio has a value normalized with the torque/stress ratio when the rib width is 0.9 mm and the ratio $W_{t3-4}/W_{t4-5}$ is 1.

FIG. 18 indicates that the torque/stress ratio hardly changes when the ratio $W_{t3-4}/W_{t4-5}$ is in the range of 0.8 to 1.2.

FIG. 18 also indicates that when the ratio $W_{t3-4}/W_{t4-5}$ is 1 or more, there is little influence of the rib width. Note that the ratio $W_{t3-4}/W_{t4-5}$ is the ratio between the average magnetic path width $W_{t3-4}$ that is on the q-axis side of the layer in which the side rib 18b is provided first and the average magnetic path width $W_{t4-5}$ that is on the d-axis side of the layer in which the side rib 18b is provided first, and as the ratio $W_{t3-4}/W_{t4-5}$ increases, the torque/stress ratio also increases as described above.

As described above, the synchronous reluctance motor according to the first embodiment includes: the stator core having the annular shape and formed with the plurality of the slots arranged at equal intervals along the inner peripheral surface; the windings housed in the slots; and the rotor core formed in the shape of the cylinder and provided on the inner surface side of the stator core. The rotor core includes: the openings each formed by two arcs that are convex toward the cylinder center in each magnetic pole when viewed in the direction of the central axis of the cylinder, the two arcs having centers located on the q-axis of the magnetic pole and having two radii of different lengths; and the plurality of the slits in which the opening is divided by the center rib. The slit groups each including the plurality of the slits are layered toward the cylinder center in each magnetic pole. The angle formed by the center points of the slits adjacent to each other with respect to the cylinder center of the rotor core is defined as the slit interval, the center points each being the midpoint in the circumferential direction of the arc-shaped end, which is along the outer peripheral surface of the rotor core, of the arc-shaped opening of the slit that is closest to the outer periphery of the rotor core. The angle formed between the slots adjacent to each other in the stator core is defined as the slot interval. At this time, the slit interval is formed to be smaller than the slot interval. In the rotor core, at least three layers of the slit groups are formed, and at least two layers of the at least three layers of the slit groups are provided with the side ribs that further divide the slit which has been already divided by the center rib. In the synchronous reluctance motor configured as described above, the average magnetic path width that is on the q-axis side of the layer in which the side rib is provided first when the plurality of the slit groups is viewed from the q-axis side to the d-axis side is formed to be larger than the average magnetic path width that is on the d-axis side of the layer in which the side rib is provided first. Forming the average magnetic path widths in such a manner can increase the torque/stress ratio as compared to a case where the average magnetic path width that is on the q-axis side of the layer in which the side rib is provided first is formed to be equal to or smaller than the average magnetic path width that is on the d-axis side of the layer in which the side rib is provided first. As a result, a reduction in the maximum torque can be prevented while maintaining the strength to withstand the centrifugal force of the rotor core.

Moreover, in the synchronous reluctance motor according to the first embodiment, when the number of the slots per magnetic pole of the stator core is nine, the rotor core can have the structure including six layers of the slit groups, the six layers including the first layer to the sixth layer in order from the q-axis side. Among these six layers of the slit groups, the layer in which the side rib is provided first may be the fifth layer, the fourth layer, or the third layer. In any structure, as long as the average magnetic path width that is on the q-axis side of the layer in which the side rib is provided first is made larger than the average magnetic path width that is on the d-axis side of the layer in which the side rib is provided first, it is possible to prevent a reduction in the maximum torque while maintaining the strength to withstand the centrifugal force of the rotor core.

Second Embodiment.

The first embodiment has described the synchronous reluctance motor having six poles and 54 slots, whereas a second embodiment will describe a synchronous reluctance motor having another structure that can obtain the effect described in the first embodiment.

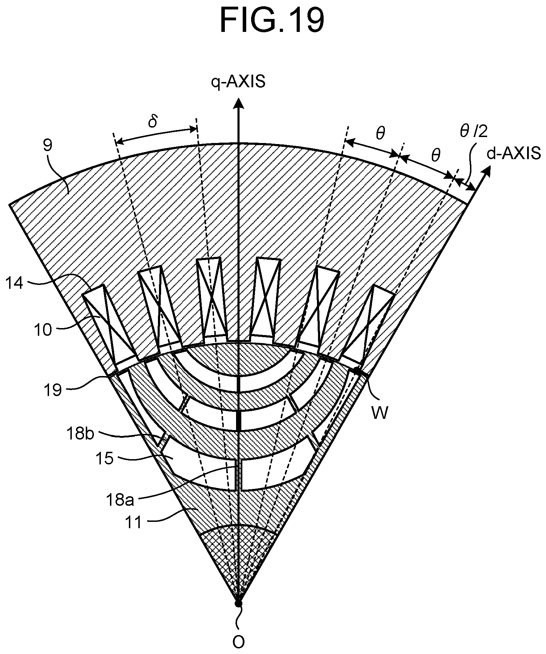

FIG. 19 is a cross-sectional view illustrating one magnetic pole of the synchronous reluctance motor 1 having six poles and 36 slots according to the second embodiment. As illustrated in FIG. 19, the stator 6 of the synchronous reluctance motor 1 having six poles and 36 slots includes six of the slots 14 per magnetic pole.

Similarly to the case of FIG. 4, each of the slits 15 is provided such that the angle $\theta$ formed by the center points "W", which are along the outer peripheral surface of the rotor core 11, of the openings of the slits 15 adjacent to each other is equal across the slits adjacent to each other. Furthermore, the angle formed by the d-axis and the straight line connecting the center point "W" of the slit 15 closest to the d-axis and the cylinder center "O" of the rotor core 11 is set to be $\theta/2$. Specifically, in the configuration of FIG. 4, the number of pitches is 54, and the slit interval $\theta$ is set to $\theta=6.67$ (=360/54) degrees. Also, in the case of the structure of FIG. 19, the number of slots "S" is S=36, and the slot interval $\delta$ is $\delta=10.0$ (=360/36) degrees. Therefore, in the case of the structure of FIG. 19, similarly to FIG. 4, the relationship of $\theta<\delta$ is established.

In addition, the rotor core 11 illustrated in FIG. 19 includes three layers of the slit groups, the three layers including the first layer to the third layer in order from the q-axis side. The slits 15 of the first layer are not provided with the side ribs 18b, and the slit groups of the second layer and the third layer are provided with the side ribs 18b. That is, the layer in which the side ribs 18b are provided first is the second layer, and the side ribs 18b are provided in the slit groups of the second layer and the third layer. Note that although not illustrated for the sake of brevity, the portions of the magnetic material between the layers serve as the magnetic paths through which a magnetic flux flows, the average magnetic path width between the slit group of the first layer and the slit group of the second layer is represented by "$W_{t1-2}$", and the average

magnetic path width between the slit group of the second layer and the slit group of the third layer is represented by "$W_{t2-3}$".

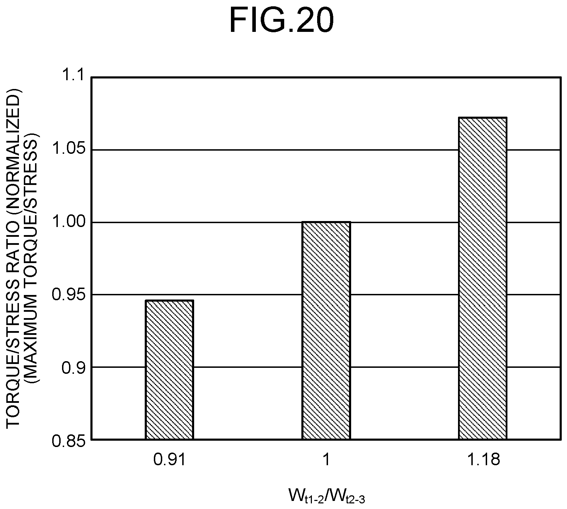

Next, a result of an electromagnetic field analysis by a finite element method performed on the rotor core 11 of the second embodiment will be described. FIG. 20 is a graph for explaining a relationship between a magnitude relationship between the average magnetic path widths $W_{t1-2}$ and $W_{t2-3}$ and the torque/stress ratio in the synchronous reluctance motor 1 according to the second embodiment. The horizontal axis in FIG. 20 represents the ratio $W_{t1-2}/W_{t2-3}$, and the vertical axis in FIG. 20 represents a value obtained by normalizing the torque/stress ratio (maximum torque/stress) when the ratio $W_{t1-2}/W_{t2-3}$ is changed with the torque/stress ratio when the ratio $W_{t1-2}/W_{t2-3}$ is 1. FIG. 20 illustrates that the torque/stress ratio is larger when the ratio $W_{t1-2}/W_{t2-3}$ is 1 than when the ratio $W_{t1-2}/W_{t2-3}$ is 0.91, and the torque/stress ratio is larger when the ratio $W_{t1-2}/W_{t2-3}$ is 1.18 than when the ratio $W_{t1-2}/W_{t2-3}$ is 1.

Therefore, in the synchronous reluctance motor 1 including the rotor core 11 illustrated in FIG. 19 as well, when the average magnetic path width that is on the q-axis side of the layer in which the side rib 18b is provided first is made larger than the average magnetic path width that is on the d-axis side of that layer, the torque/stress ratio can be improved. As a result, the synchronous reluctance motor 1 according to the second embodiment can also obtain the effect of the first embodiment that a reduction in the maximum torque can be prevented while maintaining the strength to withstand the centrifugal force of the rotor core.

The configurations illustrated in the above embodiments each merely illustrate an example so that another known technique can be combined, the embodiments can be combined together, or the configurations can be partially omitted and/or modified without departing from the scope of the present disclosure.

Reference Signs List

1 synchronous reluctance motor; 2 power supply line; 3 controller; 4 shaft; 5 frame; 6 stator; 7 rotor; 8 bearing; 9 stator core; 10 winding; 11 rotor core; 12 core back; 13 teeth; 14 slot; 15 slit; 18a center rib; 18b side rib; 19 magnetic gap.

**Claims**

1. A synchronous reluctance motor comprising:

   a stator core that has an annular shape and is formed with a plurality of slots arranged at equal intervals along an inner peripheral surface thereof;
   a winding housed in each of the slots; and
   a rotor core that is formed in a shape of a cylinder on an inner surface side of the stator core and includes:

      an opening formed by two arcs that are convex toward a cylinder center in each magnetic pole when viewed in a direction of a central axis of the cylinder, the two arcs having centers located on a q-axis of the magnetic pole and having two radii of different lengths; and a plurality of slits in which the opening is divided by a center rib, the plurality of the slits forming a slit group, the slit group being layered toward the cylinder center in each of the magnetic pole, wherein

      when a slit interval is an angle formed by center points of the slits adjacent to each other with respect to the cylinder center of the rotor core, and a slot interval is an angle formed between the slots adjacent to each other in the stator core, the slit interval is smaller than the slot interval, the center points each being a midpoint in a circumferential direction of an arc-shaped end, which is along an outer peripheral surface of the rotor core, of an arc-shaped opening of the slit that is closest to an outer periphery of the rotor core,
      in the rotor core, at least three layers of the slit groups are formed, and at least two layers of the at least three layers of the slit groups are provided with a side rib that further divides the slit divided by the center rib, and
      an average magnetic path width that is on a q-axis side of a layer in which the side rib is provided first when the plurality of the slit groups is viewed from the q-axis side to a d-axis side is larger than an average magnetic path width that is on the d-axis side of the layer in which the side rib is provided first.

2. The synchronous reluctance motor according to claim 1, wherein

   the rotor core includes six layers of the slit groups, the six layers including a first layer to a sixth layer in order from the q-axis side, and
   the layer in which the side rib is provided first is a fifth layer, and the side rib is provided in the slit groups of the fifth layer and the sixth layer.

3. The synchronous reluctance motor according to claim 1, wherein

the rotor core includes six layers of the slit groups, the six layers including a first layer to a sixth layer in order from the q-axis side, and
the layer in which the side rib is provided first is a fourth layer, and the side rib is provided in the slit groups of the fourth layer to the sixth layer.

4. The synchronous reluctance motor according to claim 1, wherein

the rotor core includes six layers of the slit groups, the six layers including a first layer to a sixth layer in order from the q-axis side, and
the layer in which the side rib is provided first is a third layer, and the side rib is provided in the slit groups of the third layer to the sixth layer.

5. The synchronous reluctance motor according to any one of claims 1 to 4, wherein
the number of the slots per magnetic pole in the stator core is nine.

6. The synchronous reluctance motor according to claim 1, wherein

the rotor core includes three layers of the slit groups, the three layers including a first layer to a third layer in order from the q-axis side, and
the layer in which the side rib is provided first is a second layer, and the side rib is provided in the slit groups of the second layer and the third layer.

7. The synchronous reluctance motor according to claim 6, wherein
the number of the slots per magnetic pole in the stator core is six.

8. A drive apparatus for a railroad vehicle, comprising the synchronous reluctance motor according to any one of claims 1 to 7.

# FIG.1

# FIG.2

# FIG.3

# FIG.4

# FIG.5

# FIG.6

# FIG.7

# FIG.8

# FIG.9

Chart with vertical axis labeled STRESS and horizontal axis labeled $W_{t2\text{-}3}/W_{t3\text{-}4}$. A dashed horizontal line is labeled "6,000rpm SPECIFIED VALUE". Bars at 0.98, 1, and 1.13.

# FIG.10

Chart with vertical axis labeled MAXIMUM TORQUE (NORMALIZED) and horizontal axis labeled $W_{t2\text{-}3}/W_{t3\text{-}4}$. Bars at 0.98, 1, and 1.13.

# FIG.11

TORQUE/STRESS RATIO (NORMALIZED) (MAXIMUM TORQUE/STRESS)

0.98    1    1.13

$W_{t2-3}/W_{t3-4}$

# FIG.12

TORQUE/STRESS RATIO (NORMALIZED) (MAXIMUM TORQUE/STRESS)

1.002    1.00    0.999

0.91    1    1.18

$(W_{t2-3}<W_{t5-6})$    $(W_{t2-3}=W_{t5-6})$    $(W_{t2-3}>W_{t5-6})$

$W_{t2-3}/W_{t5-6}$

# FIG.13

# FIG.14

# FIG.15

# FIG.16

# FIG.17

# FIG.18

# FIG.19

# FIG.20

## INTERNATIONAL SEARCH REPORT

| International application No. |
| --- |
| **PCT/JP2022/036661** |

| A. | CLASSIFICATION OF SUBJECT MATTER |
| --- | --- |

*H02K 19/10*(2006.01)i
FI:   H02K19/10 A

According to International Patent Classification (IPC) or to both national classification and IPC

| B. | FIELDS SEARCHED |
| --- | --- |

Minimum documentation searched (classification system followed by classification symbols)

H02K19/10; H02K1/276

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2020/194363 A1 (MITSUBISHI ELECTRIC CORP.) 01 October 2020 (2020-10-01) paragraphs [0002], [0015]-[0023], [0025], [0086]-[0088], fig. 3-5, 8, 34 | 1-8 |
| Y | JP 2019-180132 A (TOSHIBA INDUSTRIAL PRODUCTS & SYSTEMS CORP.) 17 October 2019 (2019-10-17) paragraphs [0032]-[0045], fig. 2 | 1-8 |
| Y | WO 2018/070430 A1 (TOSHIBA INDUSTRIAL PRODUCTS & SYSTEMS CORP.) 19 April 2018 (2018-04-19) paragraphs [0011]-[0025], fig. 1 | 1-2, 5-8 |
| A | JP 2011-211819 A (HITACHI, LTD.) 20 October 2011 (2011-10-20) paragraphs [0029]-[0032], [0063]-[0064], fig. 1, 8 | 1-8 |
| A | JP 2000-197320 A (MITSUBISHI ELECTRIC CORP.) 14 July 2000 (2000-07-14) paragraph [0018], fig. 4 | 1-8 |
| A | JP 11-168864 A (OKUMA CORP.) 22 June 1999 (1999-06-22) paragraph [0005], fig. 7 | 1-8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/036661**

| Patent document cited in search report | | | Publication date (day/month/year) | Patent family member(s) | Publication date (day/month/year) |
|---|---|---|---|---|---|
| WO | 2020/194363 | A1 | 01 October 2020 | US       2022/0216776       A1 paragraphs [0002], [0053]-[0064], [0066], [0144]-[0146], fig. 3-5, 8, 34 <br> CN       113597725       A | |
| JP | 2019-180132 | A | 17 October 2019 | (Family: none) | |
| WO | 2018/070430 | A1 | 19 April 2018 | US       2019/0238013       A1 paragraphs [0019]-[0038], fig. 1 <br> CN       109997290       A | |
| JP | 2011-211819 | A | 20 October 2011 | US       2011/0241466       A1 paragraphs [0041]-[0044], [0068]-[0069], fig. 1, 8 <br> CN       102208852       A | |
| JP | 2000-197320 | A | 14 July 2000 | US       6225724       B1 column 4, lines 45-59, fig. 4 <br> DE       19941107       A1 <br> FR       2785105       A1 <br> KR  10-2000-0028626       A | |
| JP | 11-168864 | A | 22 June 1999 | (Family: none) | |

Form PCT/ISA/210 (patent family annex) (January 2015)

**REFERENCES CITED IN THE DESCRIPTION**

**Patent documents cited in the description**

- JP 2009011118 A